**Europäisches Patentamt**

**European Patent Office**

**Office européen des brevets**

(19)

(11) Veröffentlichungsnummer: **0 144 698**
**B1**

(12) **EUROPÄISCHE PATENTSCHRIFT**

(45) Veröffentlichungstag der Patentschrift:
02.09.87

(21) Anmeldenummer: 84112989.3

(22) Anmeldetag: 27.10.84

(51) Int. Cl.⁴: **B 29 C 47/16**, B 29 C 47/22,
G 05 B 19/33 //
B29L7:00

(54) Verstellbare Extrusionsdüse und Verfahren zu deren Anwendung.

(30) Priorität: 07.11.83 US 549097

(43) Veröffentlichungstag der Anmeldung:
19.06.85 Patentblatt 85/25

(45) Bekanntmachung des Hinweises auf die Patenterteilung:
02.09.87 Patentblatt 87/36

(84) Benannte Vertragsstaaten:
DE FR GB LU NL

(56) Entgegenhaltungen:
EP-A-0 079 052
DE-A-3 006 566
DE-B-1 763 049
FR-A-2 471 269
GB-A-1 122 668
US-A-3 920 365
US-A-4 137 028
US-A-4 242 620

(73) Patentinhaber: **AMERICAN HOECHST
CORPORATION, Route 202- 206 North, Somerville,
N.J. 08876 (US)**

(72) Erfinder: **Knopf, William H., 208 Sassafras Drive,
Taylors South Carolina 29687 (US)**

(74) Vertreter: **Güthlein, Paul, Dr., KALLE
Niederlassung der Hoechst AG Patentabteilung
Postfach 3540 Rheingaustrasse 190, D-6200
Wiesbaden 1 (DE)**

EP 0 144 698 B1

**0 144 698**

**Beschreibung**

Die vorliegende Erfindung betrifft eine verstellbare Extrusionsdüse umfassend eine Vielzahl von Fließoberflächen in einander gegenüberliegender Anordnung, zwischen denen ein Düsenspalt gebildet wird, Einstellelemente, mit denen die Anordnung der Fließoberflächen zueinander verändert werden kann, wobei der Düsenspalt erweitert oder verengt wird, sowie mindestens ein Abstandsmeßgerät. Die Erfindung betrifft auch ein Verfahren zur Anwendung der erfindungsgemäßen verstellbaren Extrusionsdüse.

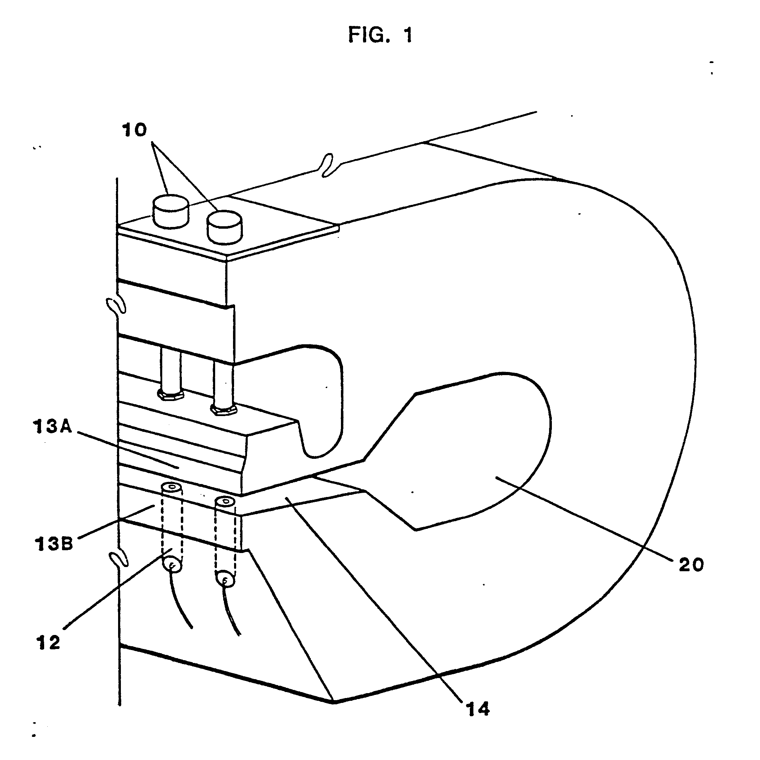

In einer Vorrichtung zur Herstellung von blattförmigen Formkörpern aus thermoplastischem Kunststoff, z. B. Feinfolie, wird gewöhnlich eine Düse wie in Figur 1 abgebildet verwendet, bei der der Spalt zwischen den Düsenlippen durch eine Vielzahl von Schrauben 10 verstellt werden kann. Die Düsenspaltbreite beträgt normalerweise 2 mm und kann innerhalb eines Bereichs von ± 0,25 mm verstellt werden. Eine thermoplastische Schmelze, z. B. aus Polyethylenterephthalat, wird mittels einer nicht dargestellten Pumpe durch eine Einlaßöffnung 20 der Düse zugeführt, durch einen Spalt zwischen einem Düsenlippenpaar 13A und 13B extrudiert und erstarrt zu einem blattförmigen Formkörper.

Die Dicke der nach dem oben beschriebenen Verfahren hergestellten Folie wird durch den Spalt zwischen den Düsenlippen 13A und 13B stark beeinflußt. Genauer gesagt, die Dickenverteilung bzw. der Dickenverlauf in Querrichtung der Folie wird in erster Linie durch den über die Breite der Düse gemessenen Verlauf des Spalts zwischen den Düsenlippen, nachfolgend "Düsenspaltweiteverteilung" genannt, bestimmt.

Die Düsenspaltweiterveteilung wird durch Verdrehen von Einstellschrauben 10 gesteuert, wobei die Düsenlippen 13A und 13B entweder einander angenähert oder auseinandergezogen werden. Da die Düsenlippen jedoch normalerweise aus einem einzigen Metallblock bestehen, ist es unmöglich, eine einzelne Schraube genau auf die gewünschte Düsenspaltbreite einzustellen, ohne dabei die Düsenspaltbreite im Bereich der benachbarten Einstellschrauben 10 zu verändern. Wegen dieser gegenseitigen Beeinflussung ist es selbst vor Inbetriebnahme der Düse äußerst schwierig, die Düsenlippen 13A und 13B so einzustellen, daß sich die gewünschte Düsenspaltweiteverteilung ergibt. Das Problem einer genauen Düsenspalteinstellung wird durch die nichtlineare Funktion der Einstellschrauben 10 erschwert, die eine "Totzone" und eine "nichtlineare Zone" aufweisen, in denen sich durch Verstellen der Schraube nur eine geringe oder gar keine Veränderung in der Spaltbreite ergibt. Diese Zonen mit nichtlinearer Funktion, die durch Gewindetoleranzen und -verschleiß verursacht werden, liegen gewöhnlich zwischen einer halben und einer ganzen Schraubenumdrehung.

Große Schwierigkeiten bereitet es in der Praxis, die gewünschte anfängliche Düsenspaltweiteverteilung durch systematisches Probieren zu erreichen, indem zunächst eine Einstellschraube 10 verstellt wird, dann die tatsächliche Düsenspaltweiteverteilung gemessen wird die gleiche oder eine andere Düsenspaltweiteverteilung nachgemessen wird usw., bis sich eine annehmbare Düsenspaltweiteverteilung ergibt. Dieses Verfahren wird häufig nach Erhitzen der Düse auf Betriebstemperatur durchgeführt (im Normalfall zwischen 275°C und 325°C), um auf diese Weise Wärmeeinflüsse auf die Düsenspaltweiteverteilung zu berücksichtigen.

Es hat sich aber in der Praxis gezeigt, daß sich die gewünschte Düsenspaltweiteverteilung während des Betriebs der Düse, d.h. während die thermoplastische Schmelze durch den Düsenspalt fließt, verändern kann. Es ist nicht ungewöhnlich, daß sich die Düsenspaltweiteverteilung während des Betriebs der Düse um 5 bis 10 % verändert.

Im Stand der Technik hat man dieses Problem allgemein dadurch zu lösen versucht, daß man die Dicke der fertigen Folie oder Feinfolie über deren Breite unterhalb der Düsenlippen, nachfolgend "Foliendickenverteilung" genannt, gemessen, eine oder mehrere Einstellschrauben 10 nachgestellt, die Foliendickenverteilung erneut gemessen und diesen Vorgang so lange wiederholt hat, bis die Foliendickenverteilung wieder in annehmbaren Grenzen lag. Aus US-A-4 124 342 ist ein automatisiertes System zur Steuerung der Foliendickenverteilung bekannt, bei dem die Anzahl der Umdrehungen, die an jeder Einstellschraube 10 erforderlich sind, um die gewünschte Düsenspaltweiteverteilung und somit die gewünschte Foliendickenverteilung zu erzielen, algorithmisch errechnet wird. Ein solches System hat aber u.a. den Nachteil, daß man davon ausgeht, daß jede Schraube der Düse gleichmäßig anspricht.

Es sind mehrere Verbesserungen bei der Steuerung der Düsenspalteinstellung gegenüber der derzeit verwendeten Düsenspaltmessung vorgeschlagen worden.

Die US-A-3 920 365 beschreibt die Steuerung der Foliendickenverteilung durch selektive thermische Überwachung von einzelnen oder eingegrenzten Abschnitten der Düsenlippen 13A und 13B mit Hilfe von Temperaturfühlern und Heizelementen, die in die Düsenlippen eingelassen sind. Durch die Überwachung von lokalisierten Temperaturänderungen kann die örtliche Schmelzeviskosität und somit die örtliche Durchflußmenge des Polymerenmaterials entweder erhöht oder vermindert werden, um so die Foliendickenverteilung innerhalb annehmbarer Grenzen zu halten.

Aus US-A-2 938 231 ist eine verstellbare Breitschlitzextrusionsdüse mit dehnbaren Einstellschrauben bekannt. Die Einstellschrauben können mit Hilfe von elektrischen Heizvorrichtungen feineingestellt werden, welche die Länge jeder Schraube zwischen ihrer Halterung im Düsenkörper und den Schraubenkontaktpunkten an der Düsenlippe steuern.

Die US-A-4 252 519 beschreibt den Ersatz der dehnbaren Einstellschrauben durch eine thermisch verstellbare Düsenlippe mit einer Wärmesperre um den Einfluß von Temperaturänderungen auf die Temperatur der Düsenlippe auf ein Mindestmaß zu begrenzen.

Die US-A 3 764 899 beschreibt den Einsatz einer kleinflächigen kapazitiv wirkenden Elektrode, die fähig ist,

2

Dickenabweichungen in einem dielektrischen Material, wie z. B. einer Kunststoffolie, zu messen.

Die genannten Probleme mit der Messung und Einstellung des Düsenspalts sind nicht alleine auf Breitschlitzdüsen beschränkt, sondern bestehen bei verstellbaren Düsen in praktisch jeder Gestalt genauso.

Aus US-A-4 137 028 ist eine Extrusionsdüse der eingangs gennanten Art für die Herstellung von röhrenförmigem Kunststoffmaterial bekannt, bei der sich eine radioaktive Quelle in zentraler Position innerhalb des Rohres befindet und eine Vielzahl von Detektorelementen auf der äußeren Kalibrierhülse angebracht sind. Die so erhaltenen Radioaktivitätsmessungen werden dazu verwendet, die Innen- oder Dorndüse in zentrierter Position zu halten, um auf diese Weise eine gleichförmige Dicke des extrudierten Rohrmaterials sicherzustellen.

Die vorliegende Erfindung hat es sich zur Aufgabe gemacht, eine Extrusionsdüse sowie ein Verfahren zu schaffen, mit denen die Messung und Einstellung der gewünschten Düsenspaltweiterverteilung mit einfachen Mitteln, aber exakt und schnell korrigierbar vorzunehmen ist.

Gelöst wird diese Aufgabe durch eine Extrusionsdüse der eingangs genannten Gattung, deren kennzeichnende Merkmale darin zu sehen sind, daß das Abstandsmeßgerät ausgewählt ist aus der Gruppe solcher Meßgeräte, die Signale kapazitiver oder optischer Art auswerten, daß das Meßgerät planeben mit der Oberfläche mindestens einer Fließoberfläche angebracht ist und, daß das Meßgerät eine Arbeitsoberfläche aufweist, die im wesentlichen genauso glatt ist wie die Oberfläche der Fließoberflächen. Damit kann das Abstandsmeßgerät die jeweilige Düsenspaltbreite während des Einsatzes der verstellbaren Extrusionsdüse bestimmen.

Das Verfahren nach der Erfindung zur Herstellung einer gleichmäßigen Dickenverteilung einer extrudierten thermoplastischen Schmelze, besteht darin, daß

i) das Extrudat durch eine verstellbare Extrusionsdüse nach einem der Ansprüche 1 bis 6

ii) die jeweilige Düsenspaltbreite gemessen wird, während das Extrudat durch die Düse exrudiert wird, und

iii) eine sofortige Korrektur jeglicher Abweichung durch entsprechende Verstellung der Einstellelemente (10) erfolgt.

Wie bereits erwähnt ist im Rahmen der vorliegenden Erfindung vorgesehen, eine einstellbare Extrusionsdüse mit mindestens einem Abstandsmeßgerät aus der Gruppe solcher Meßgeräte, die Signale kapazitiver oder optischer Art auswerten, bereitzustellen, wobei diese Meßgeräte planeben mit der Fließoberfläche der Düse angebracht sind. Die einstellbare Extrusionsdüse kann eine Runddüse, eine Breitschlitzdüse oder eine einstellbare Düse zur Herstellung von Material in irgendeiner anderen Gestalt sein. Einstellbare Düsen sind auf dem Gebiet der Extrusion bekannt.

Die erfindungsgemäß eingesetzten Abstandsmeßgeräte müssen fähig sein, bei den für eine verstellbare Extrusionsdüse üblichen Betriebsdrücken und -temperaturen (normalerweise bis zu 325°C bei der Extrusion von Polyester) zuverlässig und genau zu arbeiten. Meßgeräte, die bei den hohen Extrusionstemperaturen genau und zuverlässig sind, sind z. B. solche Meßgeräte, die Signale kapazitiver oder optischer Art auswerten. Meßgeräte mit Drahtwickelspulen, d.h. Induktivitäts-, Reluktanz- oder Magnetmeßfühler, sind durch ihren relativ komplizierten aufbau und ihre Fehleranfälligkeit für den Einsatz im Rahmen der vorliegenden Erfindung weniger geeignet.

Unter "kapazitiv wirkenden Meßgeräten" sind diejenigen Meßgeräte zu verstehen, die das Prinzip der Kapazität verwenden, um den Abstand eines entfernt vom Meßgerät befindlichen Objekts anzuzeigen. "Kapazität" wird dabei definiert als das Verhältnis zwischen der Ladung an den Leitern eines Kondensators und dem Spannungsunterschied zwischen den beiden Leitern.

Die erfindungsgemäßen kapazitiv wirkenden Meßgeräte arbeiten vorzugsweise nach dem Prinzip des Parallelplattenkondensators. Die zwischen einer planeben mit einer der Fließoberflächen der Düse angebrachten Kondensatorplatte und der gegenüberliegenden Fließoberfläche gebildete elektrische Kapazität variiert in Abhängigkeit von der Verschiebung bzw. dem Spalt zwischen den beiden Oberflächen, und zwar nach der folgenden Formel:

$$C = K \cdot A/D \ \text{I}$$

dabei ist

C die Kapazität,

K die Dielektrizitätskonstante des Mediums, das sich zwischen der Kondensatorplatte und der gegenüberliegenden Fließoberfläche befindet,

A die Kondensatorplattenfläche und

D der Abstand zwischen der planeben angebrachten Kondensatorplatte und der gegenüberliegenden Fließoberfläche.

Um Störungen zu vermeiden, ist ein Schutzring um den Umfang der Kondensatorplatte gelegt.

In der Praxis wird das kapazitiv wirkende Meßgerät eher mit Wechselstrom als mit Gleichstrom gespeist. Der aus der Platte der Meßsonde, der gegenüberliegenden Fließoberfläche und dem zwischen diesen befindlichen Dielektrikum gebildete Kondensator lädt sich ständig auf und entlädt sich wieder in Gegenphase zu dem zugeführten Wechselstrom. Diese Gegenphasigkeit zum Stromfluß ist als kapazitiver Blindwiderstand bekannt und wird in Ohm ausgedrückt:

$$X_c = \frac{1}{2\pi f \cdot C} = \frac{0.1592}{f \cdot C} \ \text{II}$$

darin ist.

$X_c$ der kapazitive Blindwiderstand,

f die Frequenz des Wechselstroms und

C die Kapazität des Kondensators.

Wenn die Wechselstromfrequenz als Konstante beibehalten bleibt, ist der kapazitive Blindwiderstand nur zur Kapazität umgekehrt proportional. Kombiniert man die obige Gleichung für die Kapazität mit der Gleichung für den kapazitiven Blindwiderstand, so erkennt man, daß der kapazitive Blindwiderstand des durch die Platte der Meßsonde, die gegenüberliegende Fließoberfläche sowie das dazwischen befindliche Dielektrikum gebildeten Kondensators direkt proportional zum Abstand zwischen der Platte der Meßsonde und der gegenüberliegenden Fließoberfläche der Extrusionsdüse ist:

$$X_c = \frac{0.1592}{f \cdot C} = \frac{0.1592}{f \cdot K \cdot A/D} = B \cdot D \quad III$$

In dieser Gleichung ist B eine Konstante, die sich aus der Kombination von Festfrequenz (f), gleichbleibender Dielektrizität des Extrudats (K), gleichbleibender Fläche der Kondensatorplatte (A) und 0,1592 ergibt. D ist der Abstand zwischen der planeben angebrachten Kondensatorplatte und der gegenüberliegenden Fließoberfläche oder der tatsächliche Düsenspalt der Extrusionsdüse an der Stelle der Meßsonde.

Da ein kapazitiver Wechselstromkreis dem Ohmschen Gesetz gemäß Gleichung IV folgt:

$$U = I \cdot X_c \quad IV$$

worin

U = Spannung,

I = Strom und

$X_c$ = kapazitiver Blindwiderstand ist,

kann man den Abstand zwischen der kapazitiv wirkenden Meßplatte und der gegenüberliegenden Fließoberfläche - d.h. den tatsächlichen Düsenspalt - als Funktion des Spannungsabfalls über den aus der Meßplatte, der gegenüberliegenden Fließoberfläche und dem dazwischen liegenden Dielektrikum gebildeten Kondensator messen.

Unter "optischen Meßgeräten" sind diejenigen Meßgeräte zu verstehen, die nach dén Prinzipien von Lichtdurchlässigkeitsgrad, -absorption und/oder -remission arbeiten, um den Abstand eines entfernt vom Meßgerät befindlichen Objekts anzuzeigen. Es wird zum Beispiel ein Bündel von faseroptischen Filamentmeßfühlern, das planeben mit einer Fließoberfläche der Düse angebracht ist, zur Messung des Absorptionsvermögens der durch die Düse fließenden thermoplastischen Schmelze verwendet.

Etwa die Hälfte der faseroptischen Filamente soll "beleuchtet" sein, d.h. durch sie wird Licht von einer Lichtquelle hindurchgeleitet. Die andere Hälfte der faseroptischen Filamente soll "dunkel" sein und dient dazu, das von der gegenüberliegenden Fließoberfläche der Düse reflektierte Licht zu empfangen. Das von der "beleuchteten" optischen Faser ausgehende Licht bewegt sich über den Düsenspalt hinweg zu der gegenüberliegenden Fließoberfläche, wird von dort reflektiert und gelangt über, den Düsenspalt zurück zu den "dunklen" lichtempfangenden optischen Fasern; daher ergibt jede Änderung des Düsenspalts um x eine Änderung des vom Licht zurückgelegten Weges um 2x, mit einer entsprechenden Änderung der Lichtintensität. Abstandsmeßgeräte aus optischen Fasern werden selbstverständlich nur dann eingesetzt, wenn das Extrudat im wesentlichen transparent ist.

Gemäß der vorliegenden Erfindung kann ein einzelnes Abstandsmeßgerät dieser Art eingesetzt werden, um örtliche Veränderungen im Düsenspalt aufzuzeigen. Vorzugsweise werden jedoch eine Vielzahl solcher Abstandsmeßgeräte eingesetzt, so daß an verschiedenen Punkten entlang der Fließoberflächen der Düsenlippen Informationen über den Düsenspalt erhalten werden können. Am vorteilhaftesten wird mit jedem Einstellelement ein mit diesem in einer Linie angeordnetes Abstandsmeßgerät gekoppelt, so daß für jede Einstellung eine lokalisierte Information über den Düsenspalt zur Verfügung steht.

Die Fließoberflächen von Extrusionsdüsen sind hochglanzpoliert, damit keine Oberflächenfehler oder "Schlieren" in der thermoplastischen Schmelze oder im fertigen Produkt entstehen können. Die Fließoberfläche muß generell eine Bearbeitungsgüte von 0,051 µm (quadratischer Mittelwert) haben, d.h. ein Oberflächenfehler darf nur um weniger als 0,051 µm von der Fließoberfläche der Düsenlippe hervorstehen. Damit das/die Abstandsmeßgerät(e) keine Oberflächenfehler in der thermoplastischen Schmelze oder im fertigen Produkt verursachen kann/können, muß dieses/müssen diese 1. planeben mit der Fließoberfläche angebracht sein und 2. eine polierte "Arbeitsoberfläche" besitzen, die mindestens genauso glatt ist wie die sie umgebende Fließoberfläche der Düsenlippe. Mit "Arbeitsoberfläche" ist derjenige Teil des Abstandsmeßgeräts gemeint, der mit der thermoplastischen Schmelze in Berührung kommt.

Die Erfindung läßt sich am besten in ihrer Anwendung auf eine verstellbare Breitschlitzextrusionsdüse erläutern. Unter "verstellbaren Breitschlitzextrusionsdüsen" sind allgemein solche Extrusionsdüsen zu verstehen, die zur Extrusion thermoplastischer Schmelzen in Form von Folien oder Feinfolien bestimmt sind und die mit Vorrichtungen zur Dickenregulierung des extrudierten Materials durch Veränderung des Düsenspalts in Abständen quer über die Düse ausgerüstet sind. Eine verstellbare Breitschlitzextrusionsdüse ist zum Beispiel in der US-A-4 124 342 beschrieben.

Die Figur 1 zeigt die bevorzugte Ausführung der Erfindung in ihrer Anwendung auf Breitschlitzdüsen mit Kapazitätsmeßgeräten. Bei der praktischen Anwendung wird der Düse eine thermoplastische Schmelze mittels einer nicht dargestellten Pumpe durch die Einlaßöffnung 20 zugeführt und wird in Form einer Folie oder Feinfolie durch einen von einem Paar Düsenlippen 13A und 13B gebildeten Düsenspalt extrudiert. Der Düsenspalt wird durch Einstellschrauben 10 in der Weise gesteuert, daß eine elastische Düsenlippe 13A von einer feststehenden Düsenlippe 13B weggezogen oder zu dieser hingedrückt wird. Planeben mit der Fließoberfläche 14 der feststehenden Düsenlippe 13B sind Kapazitätsmeßgeräte 12 angebracht, die den Einstellschrauben 10 gegenüberliegen und diesen zugeordnet sind. Die Meßgeräte können auch in der elastischen Düsenlippe sitzen, vorzugsweise werden sie jedoch in der feststehenden Düsenlippe angeordnet.

Mit der vorliegenden Erfindung wird auch ein Verfahren zur Steuerung der Schmelzendickenverteilung vorgeschlagen, bei dem erstens eine thermoplastische Schmelze durch eine verstellbare Extrusionsdüse extrudiert wird, die mit mindestens einem Abstandsmeßgerät ausgerüstet ist, und zweitens der tatsächliche Düsenspalt mit Hilfe des Abstandsmeßgeräts gemessen wird, während die thermoplastische Schmelze durch den Spalt fließt. Das Verfahren kann von Hand oder automatisch (geschlossenes Regelsystem) durchgeführt werden. Beim erstgenannten System wird/werden der/die tatsächliche(n) Ausgangswert(e) des Abstandsmeßgerätes/der Abstandsmeßgeräte mit einem Bezugsdiagramm, in dem der gemessene Düsenspalt gegenüber den Werten des Abstandsmeßgerätes/der Abstandsmeßgeräte aufgetragen ist, manuell verglichen, um den tatsächlichen Düsenspalt zu ermitteln und den Erfordernissen entsprechend einzustellen.

Ein weiter entwickeltes System arbeitet mit einem Computer, der den Düsenspalt fortlaufend überwacht und einstellt.

Ein Beispiel für die Anwendung eines derartigen Systems auf verstellbare Breitschlitzextrusionsdüsen ist in der US-A-4 124 342 beschrieben. Dabei werden mit Hilfe eines elektrischen Schaltkreises Signale von einem Meßgerät, das mittels radioaktiver Strahlung die Dickenverteilung hergestellter Folie mißt, auf einen Mechanismus übertragen, der mit den Einstellschrauben verbunden ist, und dadurch automatisch den jeweiligen Erfordernissen entsprechend die Düsenspaltbreite eingestellt.

Die vorliegende Erfindung kann auch in einer bevorzugten Ausgestaltungsform mit einem derartigen System kombiniert werden. Die von den Abstandsmeßgeräten innerhalb der Fließoberflächen gemessenen Daten können dabei wertvolle Echtzeitinformationen über die Auswirkung einer vorgegebenen Schraubeneinstellung auf die gesamte Düsenspaltweiteverteilung liefern. In Verbindung mit den von nachgeordneten Dickenmeßgeräten gelieferten Informationen über die Foliendickenverteilung ermöglichen diese Informationen eine genauere und wirksamere Kontrolle der Foliendickenverteilung.

Die Erfindung schlägt ferner ein wirksames Verfahren zur Anfangseinstellung des Düsenspaltverlaufs vor Durchfluß der Schmelze vor, durch das die Anfahrleistung verbessert wird.

Die nachfolgenden Beispiele veranschaulichen die praktische Anwendung und die Vorteile dieser Erfindung. Sie dienen lediglich der Erläuterung und sollen den Umfang der Erfindung in keiner Weise einschränken.

**Beispiel 1**

Die feststehende Düsenlippe einer Versuchsdüse (technische Daten: Düsenbreite 45,72 cm, 18 Einstellschrauben, austauschbare Lippen) wurde an der Stelle gegenüber der Einstellschraube Nr. 7 durchbohrt, so daß ein zylindrisches, kapazitiv wirkendes Abstandsmeßgerät mit einem Außendurchmesser von ca. 16 mm und einem Meßdurchmesser der Kondensatorplatte von ca. 8,13 mm planeben angebracht werden konnte. Die Kondensatorplatte und das Meßgerätgehäuse einschließlich Schutzring bestanden aus Kohlenstoffstahl. Das Meßgerät war mit einer warmfesten Keramikvergußmasse isoliert. Die Arbeitsoberfläche des für Beispiel 1 hergestellten, kapazitiv wirkenden Meßgerätes war nicht auf die gleiche Glätte bzw. Oberflächengüte wie die Fließoberfläche der Düsenlippe poliert worden, und man erwartete deshalb Oberflächenfehler in der Schmelze. Im praktischen Einsatz müssen die Arbeitsoberflächen hochpoliert sein. Das Meßgerät war an einen Sondenverstärker, Modell AS-1021 PA, Hersteller Mechanical Technology Incorporated, elektrisch angeschlossen. Der Ausgangsgleichstrom des Verstärkers wurde mit einem Fluke-A meter, Modell 8000, gemessen. Die Düse wurde dann auf 290°C vorgeheizt und ein Bezugsdiagramm aufgestellt, wozu man die Düsenspaltbreite an der Einstellschraube Nr. 7 bei verschiedenen Stellungen der Einstellschraube mit einer Kegellehre gemessen und die Ausgangsspannung des Kapazitätsmeßgeräts in jeder dieser Stellungen aufgezeichnet hat. Während dieser Messungen befand sich kein Polymeres in der Düse. Die gemessenen Werte sind in Tabelle 1 augeführt.

**Tabelle 1**

| gemessener Düsenspalt (in Zoll) | gemessene Spannung |
|---|---|
| 1,422 mm | +0,01 |
| 1,244 mm | -1,01 |
| 1,600 mm | +1,00 |
| 1,422 mm | +0,01 |
| 1,334 mm | -0,50 |
| 1,511 mm | +0,50 |

Aus den obengenannten Daten wurde eine Bezugskurve konstruiert, in der gemessener Düsenspalt gegenüber gemessener Spannung aufgetragen wurde. Die Kurvenneigung betrug ca. 0,178 mm pro Volt.

**Beispiel 2**

Die mit einem kapazitiv wirkenden Abstandsmeßgerät ausgestattete Düse aus Beispiel 1 wurde an eine Verarbeitungsanlage für Polyethylenterephthalatschmelze montiert. Die Polyethylenterephthalatschmelze wurde durch die Düse (Durchsatz 140 kg/h) zu einer Folie extrudiert, die zur Aufrechterhaltung der Folienspannung um eine Trommel geleitet und zwischen mit konstanter Geschwindigkeit rotierenden angetriebenen Walzen hindurchgeführt wurde, während mit einem NDC-Gamma-Rückstreumeßgerät die Foliendickenverteilung gemessen wurde. Die Gießgeschwindigkeit betrug 14 m/min. Die Temperatur der Polyethylenterephthalatschmelze an der Düse wurde mit einem Thermoelement gemessen und betrug anfänglich 274° C.

Als die Polyethylenterephthalatschmelze begann, durch die Düsenlippen auszutreten, sank die Spannungsablesung von dem kapazitiv wirkenden Abstandsmeßgerät wegen der unterschiedlichen Dielektrizitätskonstante des Polymeren gegenüber Luft zunächst ab und blieb dann konstant. Die Spannungsablesung wurde auf Null eingestellt.

Im Verlauf der Extrusion wurde die Schraube Nr. 7 mehrmals verstellt, um die Spannungsablesung jeweils um einen gewünschten Betrag zu verändern. Bei jeder Einstellung wurde die veränderte Spannungsablesung aufgezeichnet und die Foliendicke mit dem Gamma-Rückstreu-Dickenmesser gemessen. Die Ergebnisse sind in Tabelle 2 angegeben. Während der Extrusion der gegossenen Folie verursachte das kapazitiv wirkende Abstandsmeßgerät, wie erwartet, eine Schliere in der gegossenen Folie. Im Verlauf der Einstellvorgänge stieg die Temperatur der Polyethylenterephthalatschmelze an der Düse langsam an. Bis zur fünften Einstellung war sie um 3 Grad auf 277° C gestiegen.

**Beispiel 3**

Der Einfluß von Schwankungen in der Düsen- und Schmelzentemperatur auf die Funktion des Meßgerätes wurde beurteilt, indem die Düsenlippentemperatur und die Schmelzentemperatur unabhängig voneinander verändert und die Änderungen der Spannungsablesungen aufgezeichnet wurden. Während dieser Bewertung wurde die Schraube Nr. 7 nicht verstellt. Die erhaltenen Daten sind in den Tabellen 3 und 4 aufgeführt. Da der Einfluß der Temperaturschwankungen auf den Düsenspalt nicht unabhängig bewertet werden konnte, stellen diese Daten keinerlei Beziehung Temperatur/Spannung her. Auf jeden Fall sollen die Temperaturschwankungen über die Breite der Düse auf einem Minimum gehalten werden, und die Temperatur der thermoplastischen Schmelze soll während des Extrusionsvorgangs konstant bleiben, um eine Änderung in der Foliendickenverteilung aufgrund von Viskositätsschwankungen zu vermeiden. Methoden zur Kompensation von Temperaturschwankungen sind selbstverständlich bekannt. Eine Änderung in der Düsen- oder Schmelzentemperatur darf ferner nicht die Funktion eines faseroptischen Abstandsmeßgerätes beeinträchtigen.

Bei verstellbaren Extrusionsdüsen, die zur Einstellung der Foliendickenverteilung mit örtlicher Temperatursteuerung der Düsenlippe selbst arbeiten, empfiehlt es sich, das/die Abstandsmeßgerät(e) in der gegenüberliegenden Düsenlippe anzubringen, um einen möglichen Einfluß einer Temperaturveränderung der thermoplastischen Schmelze auf die Funktion des Abstandsmeßgerätes bzw. der Abstandsmeßgeräte auf ein Mindestmaß zu beschränken oder auszuschalten.

**Tabelle 2**

| Einstellung Nr. | anfängl. Spannung | Spannung nach Einstellung | Spannungs- änderung | anfängl. Fo- liendicke | Dicke nach Einstellung | Dicken- änderung |
|---|---|---|---|---|---|---|
| 1 | 0,00 | +0,08 | +0,08 | 183 µm | 198 µm | 15 µm |
| 2 | +0,08 | +0,04 | -0,04 | 198 µm | 190 µm | 8 µm |
| 3 | +0,04 | 0,00 | -0,04 | 190 µm | 184 µm | 6 µm |
| 4 | 0,00 | -0,04 | -0,04 | 184 µm | 177 µm | 7 µm |
| 5 | -0,04 | -0,06 | -0,02 | 177 µm | 174 µm | 3 µm |
| 6 | -0,06 | -0,08 | -0,02 | 174 µm | 171 µm | 3 µm |
| 7 | -0,08 | 0,00 | +0,08 | 171 µm | 183 µm | 12 µm |

**Tabelle 3**

Änderungen in der Düsentemperatur bei konstant gehaltener Schmelzentemperatur

| Temperatur- einstellung | anfängl. Dü- sentemperatur | neue Düsen- temperatur | Änderung | anfängl. Spannung | neue Spannung | Spannungs- änderung |
|---|---|---|---|---|---|---|
| 1 | 290°C | 300°C | +10°C | 0,00 | +0,014 | +0,014 |
| 2 | 300°C | 290°C | -10°C | +0,014 | +0,006 | -0,008 |

**Tabelle 4**

Änderungen in der Schmelzentemperatur bei konstant gehaltener Düsentemperatur

| Temperatur- einstellung | anfängl.Schmel- zentemperatur | neue Schmel- zentemperatur | Änderung | anfängl. Spannung | neue Spannung | Spannungs änderung |
|---|---|---|---|---|---|---|
| 3 | 277°C | 278°C | +1°C | 0,007 | 0,010 | +0,003 |
| 4 | 278°C | 270°C | -8°C | 0,010 | 0,19 | +0,009 |

**Patentansprüche**

1. Verstellbare Extrusionsdüse umfassend
a) eine Vielzahl von Fließoberflächen (14) in einander gegenüberliegender Anordnung, zwischen denen ein Düsenspalt gebildet wird,
b) Einstellelemente (10), mit denen die Anordnung der Fließoberflächen (14) zueinander verändert werden kann, wobei der Düsenspalt erweitert oder verengt wird,
c) mindestens ein Abstandsmeßgerät (12),
dadurch gekennzeichnet, daß das Abstandsmeßgerät (12) ausgewählt ist aus der Gruppe solcher Meßgeräte, die Signale kapazitiver oder optischer Art auswerten, daß das Meßgerät (12) planeben mit der Oberfläche mindestens einer Fließoberfläche (14) angebracht ist und, daß das Meßgerät (12) eine Arbeitsoberfläche aufweist, die im wesentlichen genauso glatt ist wie die Oberfläche der Fließoberflächen (14).

2. Extrusionsdüse nach Anspruch 1, dadurch gekennzeichnet, daß mit jedem Einstellelement (10) ein Abstandsmeßgerät (12) gekoppelt ist.

3. Extrusionsdüse nach Anspruch 1 oder 2, dadurch gekennzeichnet, daß das Abstandsmeßgerät (12) ein Gerät ist, das Signale kapazitiver Art auswertet, wobei aus der Spannungsdifferenz zwischen den Fließoberflächen (14) die jeweilige Spaltbreite bestimmt wird.

4. Extrusionsdüse nach Anspruch 1 oder 2, dadurch gekennzeichnet, daß das Abstandsmeßgerät (12) ein Gerät ist, das Signale optischer Art auswertet, wobei aus der Messung der Intensität von Licht, das von dem Meßgerät (12) ausgestrahlt wird und von der Oberfläche der gegenüberliegenden Fließoberfläche (14) reflektiert wird, die jeweilige Spaltbreite bestimmt wird.

5. Extrusionsdüse nach einem der Ansprüche 1 bis 4, dadurch gekennzeichnet, daß die Düse eine Breitschlitzdüse ist.

6. Extrusionsdüse nach einem der Ansprüche 1 bis 4, dadurch gekennzeichnet, daß die Düse eine Runddüse ist.

7. Verfahren zur Herstellung einer gleichmäßigen Dickenverteilung einer extrudierten thermoplastischen Schmelze, bei dem
i) das Extrudat durch eine verstellbare Extrusionsdüse nach einem der Ansprüche 1 bis 6 extrudiert wird,
ii) die jeweilige Düsenspaltbreite gemessen wird, während das Extrudat durch die Düse extrudiert wird, und
iii) eine sofortige Korrektur jeglicher Abweichung durch entsprechende Verstellung der Einstellelemente (10)

**0 144 698**

erfolgt.

8. Verfahren nach Anspruch 7, bei dem zur Herstellung eines blattförmigen Formkörpers zusätzlich zur Messung der jeweiligen Düsenspaltbreite (ii) und der Korrektur jeglicher Abweichung hiervon (iii)

iv) auch eine Messung der Dicke des blattförmigen Formkörpers mit einem Dickenmeßgerät erfolgt, wobei

v) eine Korrektur auch dieser Abweichung durch eine entsprechende Verstellung der Einstellelemente (10) vorgenommen wird.


**Claims**

1. An adjustable extrusion die comprising

a) a plurality of flow surfaces (14) in opposed relationship to each other, thereby defining a die gap,

b) means (10) for adjustment of the relationship of said flow surfaces (14) to each other whereby said die gap may be expanded or contracted,

c) at least one proximity sensor (12), characterized in that said sensor (12) is selected from the group consisting of capacitance-effect and optical fiber sensors and is mounted within and flush with the surface of at least one of said flow surfaces (14), and in that said sensor (12) possesses a working surface substantially as smooth as the surfaces of said flow surfaces (14).

2. The extrusion die of claim 1 wherein there is one proximity sensor (12) located in alignment with each adjustment means (10).

3. The extrusion die of claim 1 or 2 wherein said proximity sensor (12) is a capacitance-effect sensor which measures the actual die gap by measuring the voltage difference between said flow surfaces (14).

4. The extrusion die of claim 1 or 2 wherein said proximity sensor (12) is an optical fiber sensor which measures the actual die gap by measuring the intensity of light originating from said proximity sensor (12) and reflected from the opposed flow surface (14) back to said proximity sensor (12).

5. The extrusion die of any of claims 1 to 4 wherein the die is a sheet-forming extrusion die.

6. The extrusion die of any of claims 1 to 4 wherein the die is a tubular-forming extrusion die.

7. A method for control of a uniform melt thickness distribution of an extruded thermoplastic melt material, comprising

i) extruding an extrudate through an adjustable extrusion die as claimed in any of claims 1 to 6,

ii) measuring the actual die gap while said extrudate is being extruded through said die, and

iii) immediately correcting any deviation by appropriate adjustment of said means (10) for adjustment of the relationship of said flow surfaces (14) to each other.

8. The method of claim 7 comprising, in addition to (ii) measuring the actual die gap width and to (iii) correcting any deviation,

iv) measuring the thickness of said sheet-like extruded article by means of thickness measuring means, and

v) correcting any such deviation by appropriate adjustment of said means (10) for adjustment of the relationship of said flow surfaces (14) to each other,

for producing a sheet-like extruded article.


**Revendications**

1. Filière d'extrusion réglable comprenant:

a) une pluralité de surfaces d'écoulement (14) dans une disposition opposées face à face, entre lesquelles est formée une fente de filière;

b) des éléments de réglage (10) à l'aide desquels on peut modifier la disposition des surfaces d'écoulement (14) l'une par rapport à l'autre, la fente de filière étant élargie ou rétrécie dans cette manoeuvre;

c) au moins un appareil de mesure de la distance (12),

caractérisée en ce que l'appareil de mesure de la distance (12) est choisi dans le groupe des appareils de mesure qui exploitent des signaux de nature capacitive ou optique, en ce que l'appareil de mesure (12) est agencé à l'affleurement et dans le même plan que la surface d'au moins une surface d'écoulement (14) et en ce que l'appareil de mesure (12) présente une surface de travail qui est pratiquement aussi lisse que la surface des surfaces d'écoulement (14).

2. Filière d'extrusion selon la revendication 1, caractérisée en ce qu'à chaque élément de réglage (10) est accouplé un appareil de mesure de la distance (12).

3. Filière d'extrusion selon la revendication 1 ou 2, caractérisée en ce que l'appareil de mesure de la distance (12) est un appareil qui exploite des signaux de type capacitif, la largeur de la fente étant déterminée à partir de la différence de tension entre les surfaces d'écoulement (14).

4. Filière d'extrusion selon la revendication 1 ou la revendication 2, caractérisée en ce que l'appareil de mesure de la distance (12) est un appareil qui exploite des signaux de type optique, la largeur de la fente considérée étant déterminée à partir de la mesure de l'intensité de la lumière qui est rayonnée par l'appareil de mesure (12) et réfléchie par la surface de la surface d'écoulement (14) opposée.

8

5. Filière d'extrusion selon l'une des revendications 1 à 4, caractérisée en ce que la filière est une filière à large fente.

6. Filière d'extrusion selon l'une des revendications 1 à 4, caractérisée en ce que la filière est une filière ronde.

7. Procédé d'obtention d'une répartition d'épaisseur uniforme dans une masse fondue thermoplastique extrudée, dans lequel

i) l'extrudat est extrudé à travers une filière d'extrusion réglable, selon l'une des revendications 1 à 6;

ii) la largeur de la fente de la filière est mesurée au point considéré pendant que l'extrudat est extrudé à travers la filière; et

iii) il s'effectue une correction immédiate de tout écart par une manoeuvre correspondante des éléments de réglage (10).

8. Procédé selon la revendication 7, dans lequel pour produire un corps moulé en forme de feuille, on procède, en supplément de la mesure de la largeur de la fente de la filière au point considéré (ii) et à la correction de tout écart par rapport à cette largeur (iii),

iv) à une mesure de l'épaisseur du corps moulé en forme de feuille au moyen d'un appareil de mesure de l'épaisseur,

v) cependant qu'on procède aussi à une correction de cet écart par une manoeuvre appropriée des éléments de réglage (10).

FIG. 1